**Europäisches Patentamt**

**European Patent Office**

**Office européen des brevets**

(11) Veröffentlichungsnummer : **0 354 896 B1**

(12) # EUROPÄISCHE PATENTSCHRIFT

(45) Veröffentlichungstag der Patentschrift :
**21.04.93 Patentblatt 93/16**

(51) Int. Cl.⁵ : **C01F 5/02,** C01F 5/10, C04B 35/04

(21) Anmeldenummer : **89890206.9**

(22) Anmeldetag : **03.08.89**

(54) **Magnesiumoxid in Form eines feinen Pulvers und seine Verwendung.**

Verbunden mit 89909119.3/0404867 (europäische Anmeldenummer/Veröffentlichungsnummer) durch Entscheidung vom 14.01.92.

(30) Priorität : **10.08.88 AT 2006/88**

(43) Veröffentlichungstag der Anmeldung :
**14.02.90 Patentblatt 90/07**

(45) Bekanntmachung des Hinweises auf die Patenterteilung :
**21.04.93 Patentblatt 93/16**

(84) Benannte Vertragsstaaten :
**AT BE CH DE ES FR GB GR IT LI LU NL SE**

(56) Entgegenhaltungen :
FR-A- 2 401 098
US-A- 4 642 207
PATENT ABSTRACTS, Band 12, Nr. 258
(C-513)[3105], 20. Juli 1988; & JP-A-63 45 117
(UBE IND. LTD) 26-02-1988
PATENT ABSTRACTS OF JAPAN, Band 10, Nr.
63 (C-332)[2120], 13. März 1986; & JP-A-60 200
824 (SHINNIHON KAGAKU KOGYO K.K.) 11-
10-1985

(56) Entgegenhaltungen :
**PATENT ABSTRACTS OF JAPAN, Band 11, Nr.
133 (C-418)[2580], 25. April 1987; & JP-A-61 270
213 (SHIN NIPPON KAGAKU KOGYO CO., LTD)
29-11-1986**
**CHEMICAL ABSTRACTS, Band 94, Nr. 26, Juni
1981, Seite 277, Zusammenfassung Nr.
213012h, Columbus, Ohio, US; V.A. KROTIKOV
et al.: "Sintering of magnesium oxide in the
presence of additives of organometallic compounds", IZV. AKAD. NAUK SSSR. NEORG.
MATER. 1980, 16(10), 1793-6**

(73) Patentinhaber : **Veitscher
Magnesitwerke-Actien-Gesellschaft
Schubertring 10-12
A-1010 Wien (AT)**

(72) Erfinder : **Retschnig, Alexander, Dipl.-Ing.
Turmgasse 3i
A-8700 Leoben (AT)**
Erfinder : **Heindl, Roland , Dipl.-Ing, Dr.mont.
Magnesitstrasse 4
A-8700 Leoben (AT)**

(74) Vertreter : **Becker, Thomas, Dr., Dipl.-Ing. et al
Patentanwälte Becker & Müller
Eisenhüttenstrasse 2
W-4030 Ratingen 1 (DE)**

EP 0 354 896 B1

## Beschreibung

Gegenstand der Erfindung ist ein Magnesiumoxid mit einem MgO-Gehalt > 95 Gew.-%, vorzugsweise > 98 Gew.-%, in Form eines feinen Pulvers mit einer Teilchengröße < 5 µm und einer spezifischen Oberfläche < 20 m²/g, bestimmt nach BET aus der Stickstoffadsorptionsisotherme.

Um bei der Herstellung von Keramiken, z.B. von feuerfesten Erzeugnissen, eine hohe Dichte zu erzielen, ist es erwünscht, die Hohlräume zwischen den Körnern der Matrix mit sehr feinen Teilchen, d.h. mit einem Mikropulver, auszufüllen. Ein Material, das sich dabei etwa hinsichtlich der Feuerfestigkeit besonders eignet, ist ein Mikropulver auf der Grundlage von Magnesiumoxid hoher Reinheit.

Es ist Aufgabe der Erfindung, ein Magnesiumoxid-Mikropulver zu schaffen, das sich zum Ausfüllen der Hohlräume in einer Keramikmatrix und zur Herstellung hochdichter Keramiken eignet, ohne jedoch auf diese Anwendungsfälle beschränkt zu sein.

Nach der Erfindung ist ein derartiges Magnesiumoxid-Mikropulver dadurch gekennzeichnet, daß es einen statistischen Mittelwert des Kornformfaktors der Primärteilchen zwischen 1 und 1,5 aufweist und die Teilchen eine Beschichtung aus einer hydrophobierenden Substanz besitzen.

Der Kornformfaktor K ist durch die Beziehung

$$K = \frac{U^2}{4\pi F}$$

definiert, wobei U den Teilchenumfang und F die Teilchenfläche bedeutet, jeweils bezogen auf den Aufriß des Teilchens, wie er unter dem Mikroskop erscheint. Unter "Primärteilchen" sind die dispergierten, nicht agglomerierten Teilchen zu verstehen. Der Kornformfaktor K, eine dimensionslose Zahl, ist 1 im Falle eines exakt kugelförmigen Teilchens und ist umso größer, je stärker die Form des Teilchens von der Kugelform abweicht. Der Kornformfaktor mit einem statistischen Mittelwert der Verteilungskurve im Bereich zwischen 1 und 1,5 definiert demnach Primärteilchen von annähernd kugelförmiger Gestalt.

Als hydrophobierende Substanzen, mit denen die Magnesiumoxidteilchen nach der Erfindung beschichtet oder überzogen sind, eignen sich oberflächenaktive Stoffe, insbesondere ungesättigte oder gesättigte Fettsäuren oder deren Derivate, organometallische Substanzen - wie Silane, Titanate, Zircoaluminate, Metallseifen - oder Silikone oder organische Polymere.

Durch diese Substanzen wird die innere Reibung des Magnesiumoxid-Mikropulvers herabgesetzt und die Teilchen erhalten im Zusammenwirken mit dem angewendeten Bindemittel ein hohes Maß an Beweglichkeit, so daß bei der Formgebung der Keramik ein hoher Verdichtungsgrad erreicht wird.

Das erfindungsgemäße Magnesiumoxid weist im allgemeinen einen Gehalt von 0,1 bis 10 Gew.-% an hydrophobierender Substanz auf.

Durch diese Beschichtung wird der Dispergierungsgrad des Magnesiumoxid-Mikropulvers erhöht, d.h. das erfindungsgemäße Mikropulver besteht neben isoliert vorliegenden Primärteilchen nur aus relativ kleinen Agglomeraten von Primärteilchen. In diesem Sinne weist das Pulver eine Teilchengröße < 15 µm, vorzugsweise von 0,2 bis 15 µm auf. Dabei liegt die Größe der Primärteilchen bevorzugt im Bereich von 0,2 bis 2 µm.

Die spezifische Oberfläche des Mikropulvers, welche nach BET aus der Stickstoffadsorptionsisotherme bestimmbar ist, soll nicht allzu hoch sein; sie liegt beim erfindungsgemäßen Magnesiumoxid unter 20 m²/g, vorzugsweise im Bereich von 2 bis 7 m²/g.

Ein für die Zwecke der Erfindung besonders geeignetes Magnesiumoxidpulver kann durch Pyrohydrolyse einer Magnesiumchloridlösung gewonnen werden, wobei zur thermischen Zersetzung ein Sprühröstofen eingesetzt werden kann. Das dabei erhaltene Pulver wird sodann mit der hydrophobierenden Substanz beschichtet.

Einige der durch die Erfindung zu erzielenden Vorteile werden in den nachstehenden Beispielen aufgezeigt.

## Beispiel 1:

Durch Sprührösten einer gereinigten Magnesiumchloridlösung wurde ein Magnesiumoxidpulver A erhalten. Ein Teil dieses Materials wurde längere Zeit (6 Stunden) mit einer Metallseife gemischt und dabei wurde das beschichtete Magnesiumoxidpulver B erhalten. Die Eigenschaften dieser beiden Materialien A und B sind einander in der folgenden Tabelle 1 gegenübergestellt:

Tabelle 1

| | MgO-Pulver A (unbehandelt) | MgO-Pulver B (beschichtet) |
|---|---|---|
| Chemische Analyse | Gew.-% | Gew.-% |
| MgO | 97,3 | 94,4 |
| $SiO_2$ | 0,03 | 0,03 |
| CaO | 0,55 | 0,53 |
| $Fe_2O_3$ | 0,06 | 0,06 |
| $Cr_2O_3$ | 0,04 | 0,04 |
| $Cl^-$ | 1,80 | 1,75 |
| $SO_4^{--}$ | 0,20 | 0,19 |
| Metallseife | | 3,0 |
| Spez. Oberfläche | 5,2 $m^2/g$ | 5,2 $m^2/g$ |
| Körnungsanalyse | | |
| $d_{30}$ | 1,2 µm | 1,2 µm |
| $d_{50}$ | 2,0 µm | 1,8 µm |
| $d_{70}$ | 4,2 µm | 3,8 µm |
| Hydratationsgrad | 60 % | 15 % |
| Kornformfaktor der Primärteilchen statist. Mittelwert | 1,04 - 1,55 1,15 | 1,04 - 1,55 1,15 |

In der Körnungsanalyse geben die Werte $d_{30}$, $d_{50}$ und $d_{70}$ jene Teilchendurchmesser an, bei denen 30, 50 bzw. 70 % des Materials kleiner als der angegebene Wert sind.

Der Hydratationsgrad wurde bestimmt, nachdem die Proben in einem Klimaschrank 48 Stunden lang bei einer Temperatur von 40°C einer Atmosphäre mit 95 % relativer Luftfeuchtigkeit ausgesetzt worden waren. Der Hydratationsgrad wurde aus der Gewichtszunahme infolge von Aufnahme von Wasser bestimmt, wobei ein Hydratationsgrad von 100 % der vollständigen Umsetzung des MgO zu $Mg(OH)_2$ entspricht.

**Beispiel 2:**

Es wurden Steinmischungen aus 10 Gew.-% unbehandeltem Magnesiumoxidpulver A bzw. 10 Gew.-% beschichtetem Magnesiumoxidpulver B und jeweils 90 Gew.-% Sintermagnesia in einer Korngröße unter 3 mm, gewonnen aus eisenarmem Naturmagnesit, hergestellt. Die Mischungen wurden zu Steinen gepreßt und diese wurden bei einer Temperatur von 1850°C gebrannt. Tabelle 2 zeigt die an den Steinen ermittelten prüfwerte.

EP 0 354 896 B1

## Tabelle 2

| | Mit unbehandeltem MgO-Pulver A | Mit beschichtetem MgO-Pulver B |
|---|---|---|
| Rohdichte | 2,95 g/cm³ | 3,08 g/cm³ |
| offene Porosität | 17,4 Vol.-% | 13,9 Vol.-% |
| Druckfestigkeit bei Raumtemperatur | 48,1 N/mm² | 74,3 N/mm² |

**Beispiel 3:**

Aus 100 Gew.-% Magnesiumoxidpulver A bzw. 100 Gew.-% Magnesiumoxidpulver B wurden Formkörper hergestellt und bei einer Temperatur von 1600°C gebrannt. Tabelle 3 zeigt die ermittelten Prüfwerte.

## Tabelle 3

| | Mit unbehandeltem MgO-Pulver A | Mit beschichtetem MgO-Pulver B |
|---|---|---|
| Rohdichte | 3,22 g/cm³ | 3,45 g/cm³ |
| offene Porosität | 8,5 Vol.-% | 2,3 Vol.-% |
| Druckfestigkeit bei Raumtemperatur | 95 N/mm² | 134 N/mm² |

**Patentansprüche**

1. Magnesiumoxid mit einem MgO-Gehalt > 95 Gew.-%, vorzugsweise > 98 Gew.-%, in Form eines feinen Pulvers mit einer Teilchengröße < 15 $\mu$m und einer spezifischen Oberfläche < 20 m²/g, bestimmt nach BET aus der Stickstoffadsorptionsisotherme, **dadurch gekennzeichnet**, daß es einen statistischen Mittelwert des Kornformfaktors der Primärteilchen zwischen 1 und 1,5 aufweist, wobei der Kornformfaktor durch die Beziehung $K = \frac{U^2}{4\pi F}$ definiert ist, in der U den Teilcherunfang und F die Teilcherfläche bedeutet, jeweils bezogen auf den Aufriß des Teilchens wie er unter dem Mikroskop erscheint, und die Teilchen eine Beschichtung aus einer hydrophobierenden Substanz besitzen.

2. Magnesiumoxid nach Anspruch 1, dadurch gekennzeichnet, daß es eine Teilchengröße von 0,2 bis 15 $\mu$m aufweist.

3. Magnesiumoxid nach Anspruch 2, dadurch gekennzeichnet, daß es eine Größe der Primärteilchen von 0,2 bis 2 $\mu$m aufweist.

4. Magnesiumoxid nach einem der Ansprüche 1 bis 3, dadurch gekennzeichnet, daß es eine spezifische Oberfläche von 2 bis 7 m²/g besitzt.

4

5. Magnesiumoxid nach einem der Ansprüche 1 bis 4, dadurch gekennzeichnet, daß es durch Pyrohydrolyse einer Magnesiumchloridlösung gewonnen ist.

6. Magnesiumoxid nach einem der Ansprüche 1 bis 5, dadurch gekennzeichnet, daß die hydrophobierende Substanz aus einem oberflächenaktiven Stoff, insbesondere aus ungesättigten oder gesättigten Fettsäuren oder deren Derivaten, organometallischen Substanzen - wie Silanen, Titanaten, Zircoaluminaten, Metallseifen - oder Silikonen oder organischen Polymeren besteht.

7. Magnesiumoxid nach einem der Ansprüche 1 bis 6, dadurch gekennzeichnet, daß es einen Gehalt von 0,1 bis 10 Gew.-% hydrophobierender Substanz aufweist.

8. Verwendung des mit einer Beschichtung aus hydrophobierender Substanz versehenen Magnesiumoxidpulvers nach einem der Ansprüche 1 bis 7 zur Herstellung hochdichter Keramiken.

## Claims

1. Magnesium oxide having an MgO content of greater than 95 wt.%, preferably greater than 98 wt.%, being present in fine powder form having a particle size less than 15 $\mu$m and a BET specific surface area less than 20 m$^2$/g as determided from the nitrogen adsorption isotherm, **characterized in that** the statistical mean of the particle shape factor of the primary particles lies between 1 and 1.5 wherein the particle shape factor being defined by the relation K = U$^2$/4$\pi$ F, in which U is the particle circumference and F is the particle surface area, both related to the elevation of said particle as it appears under the microscope, and that the particles present a coating of a hydrophobic substance.

2. Magnesium oxide according to claim 1, characterized in that the particle size is between 0.2 and 15 $\mu$m.

3. Magnesium oxide according to claim 2, characterized in that the size of its primary particles is between 0.2 and 2 $\mu$m.

4. Magnesium oxide according to one of claims 1 to 3, characterized in that it has a specific surface area of 2 to 7 m$^2$/g.

5. Magnesium oxide according to one of claims 1 to 4, characteriezed in that it has been prepared by pyrohydrolysis from a magnesium chloride solution.

6. Magenesium oxide according to one of claims 1 to 5, characterized in that the hydrophobic substance consists of a surface-active material, in particular of unsaturated or saturated fatty acids or dervatives thereof, organo-metallic compounds - such as silicanes, tinanates, zirconium aluminates, metal soaps - or silcones or organic polymers.

7. Magnesium oxide according to one of claims 1 to 6, characterized in that it contains 0.1 to 10 wt% of a hydrophobic substance.

8. The use of magnesium oxide powder with a cover of a hydrophobic substance according to one of claims 1 to 7 for manufactoring high-density ceramics.

## Revendications

1. Oxyde de magnésium avec une teneur en MgO > 95 % en poids, de préférence > 98 % en poids, sous forme d'une fine poudre à taille particulaire < 15 $\mu$m et une surface spécifique < 20 m$^2$/g, déterminée suivant BET, à partir de l'isotherme d'adsorption d'azote, caractérisé en ce qu'il présente une valeur moyenne statistique du facteur de forme granulaire des particules primaires comprise entre 1 et 1,5, le facteur de forme granulaire étant défini par la relation K $= \dfrac{U^2}{4\Pi F}$, dans laquelle U est la circonférence de particule et F la surface de particule, chaque fois rapportées à la projection sur un plan de la particule telle qu'elle apparaît au microscope, et les particules présentant un revêtement composé d'une substance hydrophobe.

2. Oxyde de magnésium selon la revendication 1, caractérisé en ce qu'il présente une taille particulaire allant de 0,2 à 15 μm.

3. Oxyde de magnésium selon la revendication 2, caractérisé en ce qu'il présente une taille des particules primaires allant de 0,2 à 2 μm.

4. Oxyde de magnésium selon l'une des revendications 1 à 3, caractérisé en ce qu'il présente une surface spécifique allant de 2 à 7 m$^2$/g.

5. Oxyde de magnésium selon l'une des revendications 1 à 4, caractérisé en ce qu'il est obtenu par pyrohydrolyse d'une solution de chlorure de magnésium.

6. Oxyde de magnésium selon l'une des revendications 1 à 5, caractérisé en ce que la substance hydrophobe est composée d'une substance tensio-active, en particulier d'acides gras insaturés ou saturés ou de leurs dérivés, de substances organométalliques - tels que les silanes, titanates, zircoaluminates, savons métalliques - ou silicones ou polymères organiques.

7. Oxyde de magnésium selon l'une des revendications 1 à 6, caractérisé en ce qu'elle présente une teneur en substance hydrophobe allant de 0,1 à 10 % en poids.

8. Utilisation de la poudre d'oxyde de magnésium pourvue d'un revêtement à base de substance hydrophobe, selon l'une des revendications 1 à 7, pour la fabrication de céramiques à haute densité.